# EUROPEAN PATENT APPLICATION

(11) **EP 2 940 301 A1**
(43) Date of publication of application: **04.11.2015**
(21) Application number: 13863579.2
(22) Date of filing: 06.11.2013
(51) Int. Cl.: F04C 18/02, F04C 29/00, F04C 29/02

(54) **MAIN BEARING HOUSING, DYNAMIC SCROLL COMPONENT AND SCROLL COMPRESSOR**

(30) Priority: 12.12.2012 CN 201210535807; 12.12.2012 CN 201220682332 U
(71) Applicant: Emerson Climate Technologies (Suzhou) Co., Ltd., Suzhou, Jiangsu 215021 (CN)
(72) Inventor: SU, Xiaogeng, Jiangsu 215021 (CN)
(74) Representative: Bryn-Jacobsen, Caelia
(86) International application number: PCT/CN2013/086584
(87) International publication number: WO 2014/090054

(57) **Abstract**

Disclosed are a main bearing housing (40) for a scroll compressor, a dynamic scroll component (60) for the scroll compressor and the scroll compressor. The main bearing housing (40) comprises an anti-thrust surface (S1) for supporting the dynamic scroll component (60), an uneven construction (W) is formed on at least one portion of the anti-thrust surface (S1) to enable a lubricant to form a fluid dynamic pressure lubricating oil film between the main bearing housing (40) and the dynamic scroll component (60). The dynamic scroll component (60) comprises an anti-thrust surface (S2) for being supported by the main bearing housing (40), wherein an uneven construction (W) is formed on at least one portion of the anti-thrust surface (S2) to enable the lubricant to form a fluid dynamic pressure lubricating oil film between the main bearing housing (40) and the dynamic scroll component (60). The scroll compressor comprises at least one of the main bearing housing (40) and the dynamic scroll component (60). No matter whether the dynamic scroll component (60) can produce sufficient oblique circumferential translation or not, a good lubrication can be provided between the dynamic scroll component (60) and the main bearing housing (40).

## Description

This application claims priorities to the Chinese patent applications Nos. 201210535807.6 and 201220682332.9 which are filed on December 12, 2012 with the title of "main bearing housing, movable scroll and scroll compressor" before the Chinese State Intellectual Property Office. The entire disclosures of the applications are incorporated herein by reference.

### TECHNICAL FIELD

The application relates to a main bearing housing for a scroll compressor, a movable scroll for a scroll compressor and a scroll compressor.

### BACKGROUND

The descriptions in this section merely provide background information related to the present disclosure, which may not necessarily constitute the prior art.

A scroll compressor generally includes a compression mechanism consisting of a fixed scroll and a movable scroll. The movable scroll is supported by a main bearing housing for proving axial restraint. In an existing scroll compressor, thrust surfaces of the movable scroll and of the main bearing housing are both substantially formed as flat surfaces. However, in certain situations, there cannot be provided a good lubrication for lubricant between such thrust surfaces of the main bearing housing and of the movable scroll with such configuration.

Thus, it is desirable to propose a thrust surface construction where a good lubrication may be available in various situations.

### SUMMARY

According to an aspect of an embodiment of the present application, a main bearing housing for a compressor is provided, including a thrust surface for supporting a movable scroll. An uneven construction is formed on at least part of the thrust surface such that a hydrodynamic lubrication oil film can be formed from lubricant between the main bearing housing and the movable scroll.

According to another aspect of an embodiment of the present application, a movable scroll for a compressor is provided, including a thrust surface for being supported by a main bearing housing. An uneven construction is formed on at least part of the thrust surface such that lubricant can form a hydrodynamic lubrication oil film between the movable scroll and the main bearing housing.

According to a further aspect of an embodiment of the present application, a compressor is provided, including at least one of the above-mentioned main bearing housing and the above-mentioned movable scroll.

### BRIEF DESCRIPTION OF THE DRAWINGS

Features and advantages of one or more embodiments of the present application may become apparent from the following description made with reference to the drawings in which:
Figure 1 is a longitudinal section view of a conventional scroll compressor;
Figure 2 is a perspective view of a main bearing housing of the scroll compressor shown in Figure 1;
Figure 3 is a perspective view of a movable scroll of the scroll compressor shown in Figure 1;
Figures 4A and 4B are schematic views for explaining formation of a hydrodynamic lubrication oil film in the conventional scroll compressor;
Figure 5 is a perspective view of a main bearing housing according to a first embodiment of the application;
Figure 6 is a section view of the main bearing housing according to the first embodiment of the application;
Figure 7 is an enlarged view of part I in Figure 6;
Figure 8 is an enlarged section view of a thrust surface in a variation of the first embodiment of the application;
Figure 9 is an enlarged section view of a thrust surface in another variation of the first embodiment of the application;
Figure 10 is a schematic view for explaining formation of a hydrodynamic lubrication oil film in the scroll compressor according to the application;
Figure 11 is a perspective view of a main bearing housing according to a second embodiment of the application;
Figure 12 is a perspective view of a main bearing housing according to a third embodiment of the application; and
Figure 13 is a perspective view of a movable scroll according to a fourth embodiment of the application.

### DETAILED DESCRIPTION

The following description of various embodiments of the application is only illustrative rather than a limitation to the present application and application or use thereof. Like reference numerals are used to indicate like parts throughout the drawings. Thus, the construction of the like parts will not be descried repeatedly. The dimension relation of various configurations in the drawings a only illustrative, but not representing actual dimension relations.

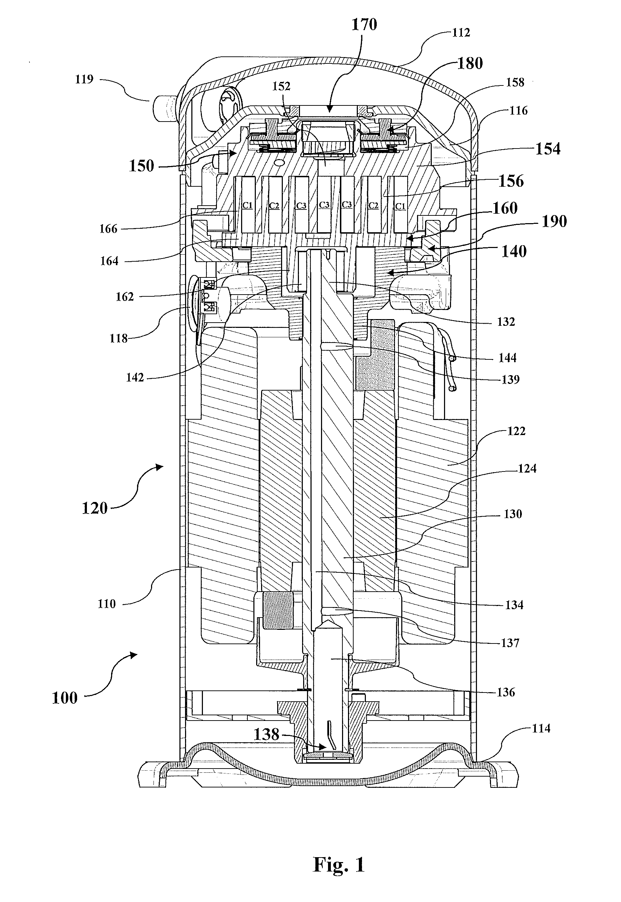

The general configuration and operation principle of a scroll compressor will be described first with reference to Figure 1. As shown in Figure 1, A scroll compressor 100 (also referred to as compressor sometimes hereinafter) generally includes a shell110, a top cover 112 provided at one end of the shell 110, a bottom cover 114 provided at the other end of the shell 110, and a partition plate 116 provided between the top cover 112 and the shell 110 for separating the internal space of the compressor into high-pressure side and low-pressure side. The space between the partition plate 116 and the top cover 112 constitutes the high-pressure side, while the space among the partition plate 116, the shell 110 and the bottom cover 114 constitutes the low-pressure side. An intake joint 118 for sucking fluid is provided on the low-pressure side, and a discharge joint 119 for discharging compressed fluid is provided on the high-pressure side. A motor 120 consisting of a stator 122 and a rotor 124 is provided in the shell 110. A drive shaft 130 is provided in the rotor 124 to drive a compression mechanism consisting of a fixed scroll 150 and a movable scroll 160. The movable scroll 160 includes an end plate 164, a hub 162 formed on one side of the end plate and a spiral vane 166 formed on the other side of the end plate. The fixed scroll 150 includes an end plate 154, a spiral vane 156 formed on one side of the end plate and a discharge port 152 formed substantially at the center of the end plate. A series of compression pockets C1, C2 and C3 with volumes gradually decreasing from the radial outer side to the radial inner side are formed between the spiral vane 156 of the fixed scroll 150 and the spiral vane 166 of the movable scroll 160. The compression pocket C1 at the radial outermost side is at a suction pressure, and the compression pocket C3 at the radial innermost side is at a discharge pressure. The middle compression pocket C2 is at a pressure between the suction pressure and the discharge pressure, thus referred to as medium-pressure pocket.

The movable scroll 160 is supported at one side thereof by the upper portion of the main bearing housing 140 (i.e., the supporting portion), and the drive shaft 130 is supported at one end thereof by a main bearing 144 provided in the main bearing housing 140. An eccentric crankpin 132 is provided on one end of the drive shaft 130, and an unloading bush 142 is provided between the eccentric crankpin 132 and the hub 162 of the movable scroll 160. Under drive of the motor 120, the movable scroll 160 will orbit relative to the fixed scroll 150 (i.e., the central axis of the movable scroll 160 rotates about the central axis of the fixed scroll 150, but the movable scroll 160 itself cannot rotate about its central axis) so as to achieve the compression of fluid. The above orbit motion is achieved by a Oldham coupling 190 provided between the fixed scroll 150 and the movable scroll 160. Fluid compressed by the fixed scroll 150 and the movable scroll 160 is discharged through the discharge port 152 to the high-pressure side. In order to prevent the fluid on the high-pressure side from flowing back to the low-pressure side via the discharge port 152 in certain situations, a check valve or discharge valve 170 may be provided at the discharge port 152.

In order to compress fluid, effective sealing is required between the fixed scroll 150 and the movable scroll 160.

On the one hand, axial sealing is required between the top end of the spiral vane 156 of the fixed scroll 150 and the end plate 164 of the movable scroll 160 and between the top end of the spiral vane 166 of the movable scroll 160 and the end plate 154 of the fixed scroll 150. Generally, a back pressured cavity 158 is provided on the side of the end plate 154 of the fixed scroll 150 opposite to the spiral vane 156. A seal assembly 180 is provided in the back pressured cavity 158, and is limited in the axial displacement by the partition plate 116. The back pressured cavity 158 is in fluid communication with the medium-pressure pocket C2 via a through hole (not shown) formed in the end plate 154 and extending axially so as to create a force for pushing the fixed scroll 150 towards the movable scroll 160. Since the movable scroll 160 is supported on one side thereof by the supporting portion of the main bearing housing 140, the fixed scroll 150 and the movable scroll 160 may be effectively pushed together under the pressure in the back pressured cavity 158. When the pressure in individual compression pockets exceeds a set value, the resultant force from the pressure in these compression pockets will exceed the downward pressure provided in the back pressured cavity 158, so that the fixed scroll 150 will move upwards. Then, the fluid in the compression pockets may leak into the low-pressure side through a gap between the top end of the spiral vane 156 of the fixed scroll 150 and the end plate 164 of the movable scroll 160 and a gap between the top end of the spiral vane 166 of the movable scroll 160 and the end plate 154 of the fixed scroll 150 so as to achieve unloading, thereby providing axial compliance for the scroll compressor.

On the other hand, radial sealing is required between side surfaces of the spiral vane 156 of the fixed scroll 150 and of the spiral vane 166 of the movable scroll 160. Such radial sealing therebetween is generally implemented by means of a centrifugal force generated from the motion of the movable scroll 160 and a drive force provided from the drive shaft 130. Specifically, in operation, under drive of the motor 120, the movable scroll 160 will orbit relative to the fixed scroll 150, so that the movable scroll 160 will generate a centrifugal force. In addition, the eccentric crankpin 132 of the drive shaft 130 may also generate a drive component force during rotation for facilitating the radial sealing between the fixed scroll and the movable scroll. The spiral vane 166 of the movable scroll 160 will abut against the spiral vane 156 of the fixed scroll 150 by means of the centrifugal force and the drive component force mentioned above, thereby achieving the radial sealing therebetween. When incompressible matters (e.g., solid impurities, lubricating oil and liquid lubricate) enter the compression pockets and are jammed between the spiral vane 156 and the spiral vane 166, the spiral vane 156 and the spiral vane 166 can temporarily move away from each other in the radial direction so as to allow the foreign matters to pass therethrough, thereby preventing damage to the spiral vane 156 or 166. Such capability of radial separation from each other provides radial compliance for the scroll compressor, improving the reliability of the compressor.

The process for lubricating various parts of the compressor will be described below. In an example of the vertical scroll compressor shown in Figure 1, lubricant is stored at the bottom of the shell of the compressor. Accordingly, a passage is formed in the drive shaft 130 and extends substantially in the axial direction of the drive shaft 130, including a central hole 136 formed in the lower end of the drive shaft 130 and an eccentric hole 134 extending from the central hole 136 upwards to the end face of the eccentric crankpin 132. An end of the central hole 136 is immersed in lubricant at the bottom of the shell of the compressor or otherwise is provided with lubricant. In an example, a lubricant supplying means may be provided in or near the central hole 136, for example, the oil pump or fork 138 as shown in Figure 1 or the like. In operation of the compressor, lubricant is provided into one end of the central hole 136 by the lubricant supplying means, is then pumped or threw into the eccentric hole 134 under the centrifugal force as the drive shaft 130 rotates, and flows upwards along the eccentric hole 134 to the end face of the eccentric crankpin 132. The lubricant discharged out of the end face of the eccentric crankpin 132 flows downwards through a gap between the unloading bush 142 and the eccentric crankpin 132 and a gap between the unloading bush 142 and the hub 162 into the recess 146 of the main bearing housing140. A part of the lubricant collected in the recess 146 flows downwards through the main bearing 144, and another part of the lubricant is stirred by the hub 162, then flows upwards to the underside of the end plate 164 of the movable scroll 160 and spreads over the thrust surfaces of the movable scroll 160 and of the main bearing housing140 as the movable scroll 160 orbits. In order to improve the lubricating and cooling effect on the rotor 124 of the motor, a radial hole 139 may be arranged in the drive shaft 130 to directly provide lubricant from the eccentric hole 134 to the rotor 124. Furthermore, a radial hole 137 may also be arranged in the drive shaft 130 to directly provide lubricant to the lower bearing for supporting the lower end of the drive shaft 130. In operation of the compressor, the lubricant supplied to various movable parts of the compressor is threw and splashed so as to form droplets or mist. Such droplets or mist of the lubricant will be introduced into working fluid (or refrigerant) sucked from the intake joint 118. Then, the working fluid mixed with the droplets of the lubricant is sucked into the compression pockets between the fixed scroll 150 and the movable scroll 160 so as to achieve the lubrication, sealing and cooling inside these scrolls. Such lubrication between the movable scroll and the fixed scroll is generally known as oil mist lubrication.

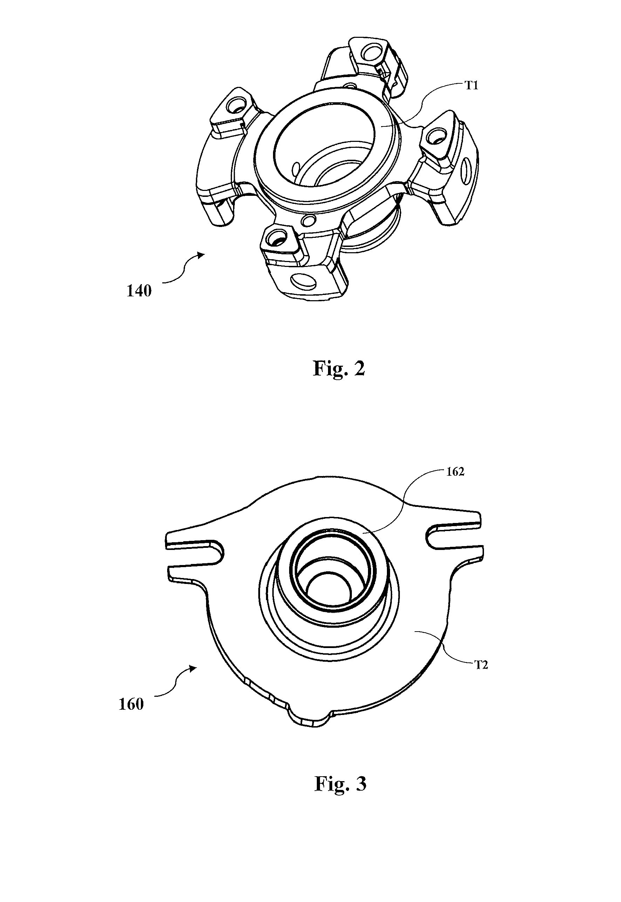

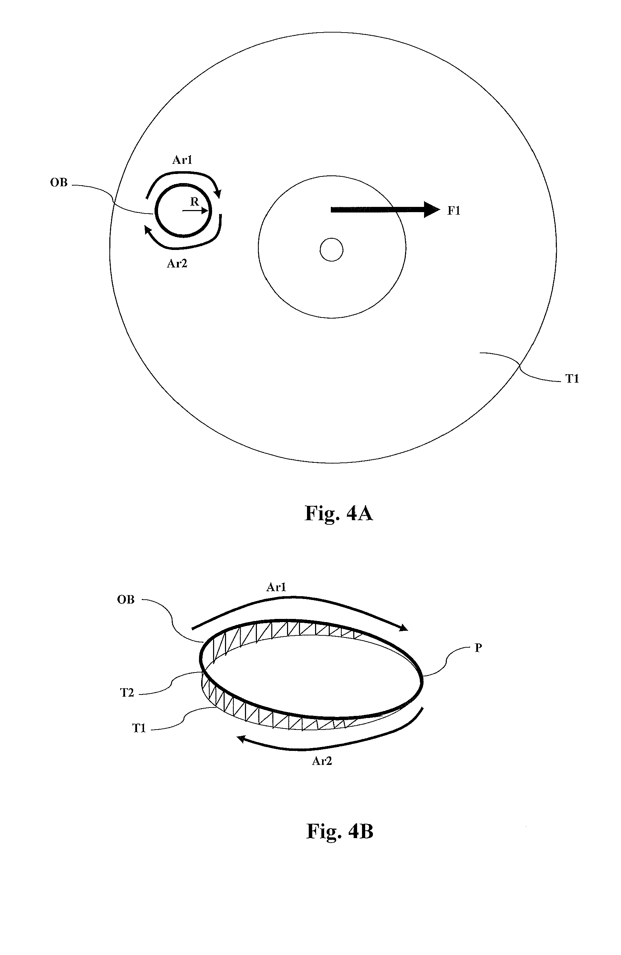

As described above, the axial sealing between the movable scroll 160 and the fixed scroll 150 is mainly achieved by the main bearing housing 140 for axially supporting the movable scroll 160 as well as the seal assembly 180 and the back pressured cavity 158 for providing the fixed scroll 150 with the back pressure. As shown in Figures 2 and 3, the thrust surface T1 of the main bearing housing140 and the thrust surface T2 of the movable scroll 160 are commonly formed to be flat. The lubrication process between the main bearing housing 140 and the movable scroll 160 in such configuration will be described below with reference to Figures 4A and 4B. In Figure 4A, T1 schematically denotes the thrust surface of the main bearing housing 140; OB schematically denotes the orbiting path of any point on the movable scroll 160, i.e., the point does not rotate about its axis but moves only along the path OB; R denotes a radius of the orbiting path and is referred to as an orbiting gyration radius of the movable scroll; F1 denotes a drive force of the drive shaft 130 applied to the movable scroll 140; Ar1 and Ar2 denote the paths at different stages of the orbiting motion of any point on the movable scroll 160. Only the orbiting path OB of one point on the movable scroll is shown in Figure 4A, however, the person skilled in the art will appreciate that each point on the movable scroll makes similar orbiting motion in practice. In Figure 4B, T2 denotes the thrust surface of the movable scroll 160.

In operation of the scroll compressor, the movable scroll 160 may be subject to a drive force from the drive shaft 130, a gas force applied by gas in the compression pockets (including a horizontal component force and a vertical component force), a pressure in the back pressured cavity and a supporting force from the main bearing housing. The movable scroll will tilt with respect to the main bearing under the action of these forces. Thus, as shown in Figure 4B, an angle is formed between the thrust surface T2 of the movable scroll and the thrust surface T1 of the main bearing housing. In orbiting motion of the movable scroll, one point P on the thrust surface T2 may move relative to the thrust surface T1 along the path OB in the directions indicated by arrows Ar1 and Ar2. As shown in Figure 4B, a distance spaced between the thrust surfaces T1 and T2 in the axial direction of the compressor is gradually decreased in the extent of arrow Ar1 but increased in the extent of arrow Ar2. As such, in orbiting motion of the movable scroll, the lubricant between the thrust surfaces T1 and T2 has increasing pressure in the extent of arrow Ar1 so as to generate a fluid dynamic pressure forcing the two thrust surfaces T1 and T2 to go away from each other, thereby forming a lubricant film capable of providing good lubrication (i.e., forming a so-called wedge effect). Besides, the lubricant between the thrust surfaces T1 and T2 has a decreasing pressure in the extent of arrow Ar2 so as to destroy the lubricant film. With the above process, the movable scroll floats on the main bearing housing by the hydrodynamic lubrication oil film of lubricant during the orbiting motion, thereby effectively reducing the friction therebetween.

However, in certain situations, the above tilt orbiting motion of the movable scroll may not be effectively performed, resulting in that the above-mentioned hydrodynamic lubrication oil film of lubricant cannot be formed. For example, with the increasing environmental requirements, there is a trend to use CO₂ as the refrigerant of the compressor. In case of using CO₂ as refrigerant, on the one hand, since the pressure in the compression pockets is to be increased, the height of the scroll vane will be designed to be lowered in order to enhance the strength of the scroll; on the other hand, since the pressure in the compression pockets is increased, the overall force applied to the movable scroll may be changed such as to reduce the tilt degree of the movable scroll during the orbiting motion.

According to embodiments of the application, even if the movable scroll cannot carry out effective tilt orbiting motion, the hydrodynamic lubrication oil film of lubricant can be formed effectively.

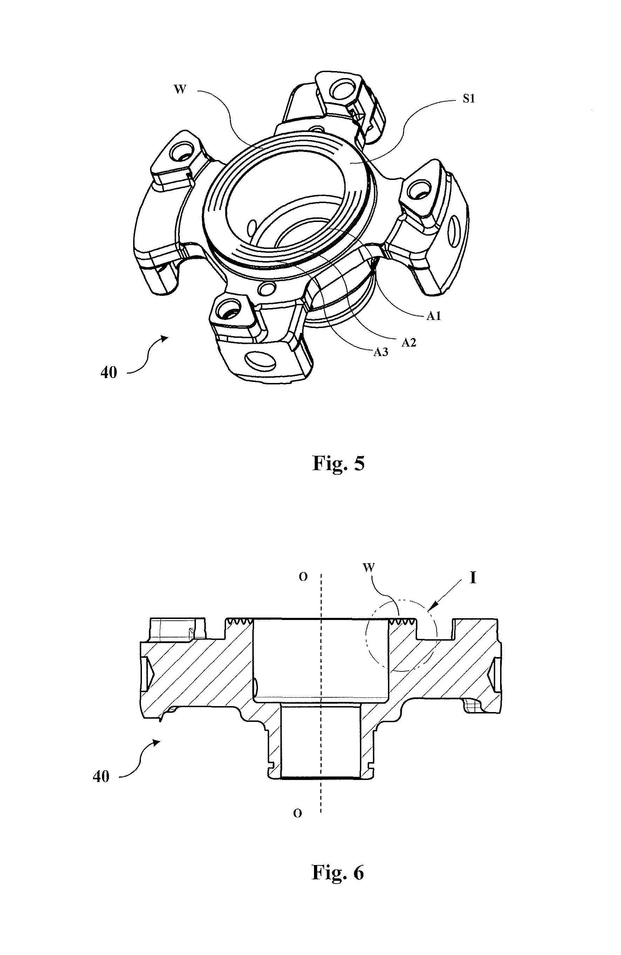

The configuration of the main bearing housing 40 according to a first embodiment of the application will be described below with reference to Figures 5-7.

As shown in Figure 5, the main bearing housing 40 for a scroll compressor may include the thrust surface S1 for supporting the movable scroll 160. An uneven construction W is formed on at least part of the thrust surface S1 such that a hydrodynamic lubrication oil film can be formed from lubricant between the main bearing housing 40 and the movable scroll 160. Preferably, the uneven construction W may be formed over the entire thrust surface S1. The uneven construction W may include a plurality of protrusions or recesses. In particular, the uneven construction W on the thrust surface S1 of the main bearing housing 40 includes at least a surface inclined relative to the thrust surface of the movable scroll 160. In this case, the thrust surface of the movable scroll 160 may be flat or, like the main bearing housing of the invention, may be also formed with an uneven construction.

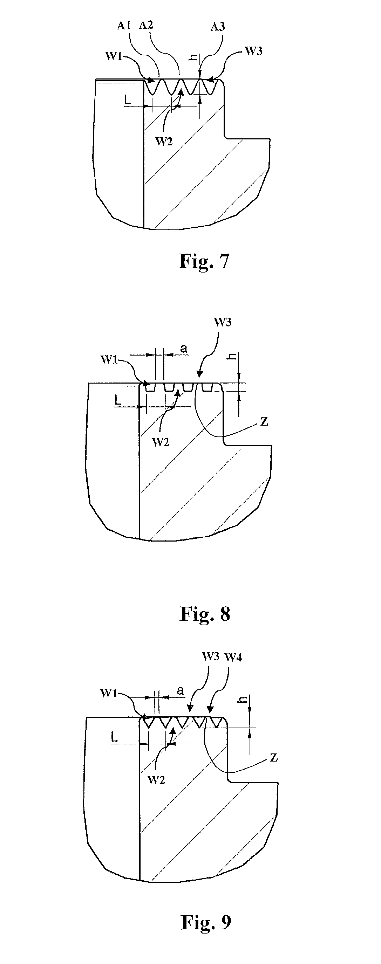

As shown in the section views of Figures 6 and 7, in the first embodiment, the uneven construction W may be formed in a corrugated shape. More specifically, the corrugated surface may include one or more waves. In an example shown in Figure 7, the corrugated surface is exemplarily shown as including waves W1, W2 and W3. The locus lines A1, A2, A3 of the crest (or trough) of individual waves W1, W2 and W3 (that is, projection of extension of the crest or trough of a wave on a plane) are configured such that the locus lines A1, A2, A3 are formed as a circle with the center being the central axis O-O of the main bearing housing.

Each wave W1, W2 and W3 of the corrugated surface may be formed in a wavy-shape, e.g., a sinusoidal shape. Alternatively, as shown in Figure 8, each wave W1, W2 and W3 of the corrugated surface may be formed in a trapezoidal shape. As shown in Figure 9, each wave W1, W2, W3 and W4 of the corrugated surface may be formed in a triangular shape. Person skilled in the art will appreciate that the individual waves of the corrugated surface may also be formed in any other shape.

In the individual wave shapes as shown in Figures 7-9, the wavelength L of each wave of the corrugated surface (i.e., the length between two adjacent crests or troughs) may be set to be between 0.25 and 2 times as long as the orbiting gyration radius R of the movable scroll. Preferably, the wavelength L of each wave of the corrugated surface may be set to be between 0.75 and 1.5 times as long as the orbiting gyration radius R of the movable scroll. More preferably, the wavelength L of each wave of the corrugated surface (i.e., the length between two adjacent crests or troughs) may be set to be equal to the orbiting gyration radius R of the movable scroll. The amplitude h of the corrugated surface (i.e., vertical height between the crest and the trough) may be set to be larger than 10 micrometers, preferably between 30 and 100 micrometers.

In the example as shown in Figure 8, when each wave of the corrugated surface is a trapezoidal wave, the length a of the top side Z of the trapezoidal wave may be set to be between 1/6 and 1/2 times as long as the wavelength L of the trapezoidal wave. In the example as shown in Figure 9, there may be a platform Z at the crest of the triangular wave, and the length a of the platform Z may be also set to be between 1/6 and 1/2 times as long as the wavelength L of the triangular wave.

The above-mentioned corrugated surface may be produced by any one of the following processes, for example, a) machining, such as turning or grinding; b) pressing; c) stamping. Further, the corrugated surface may be integrally formed on the main bearing housing 40, or the corrugated surface may be formed on a separate member (for example, a stamping part) which is then assembled onto the main bearing housing 40.

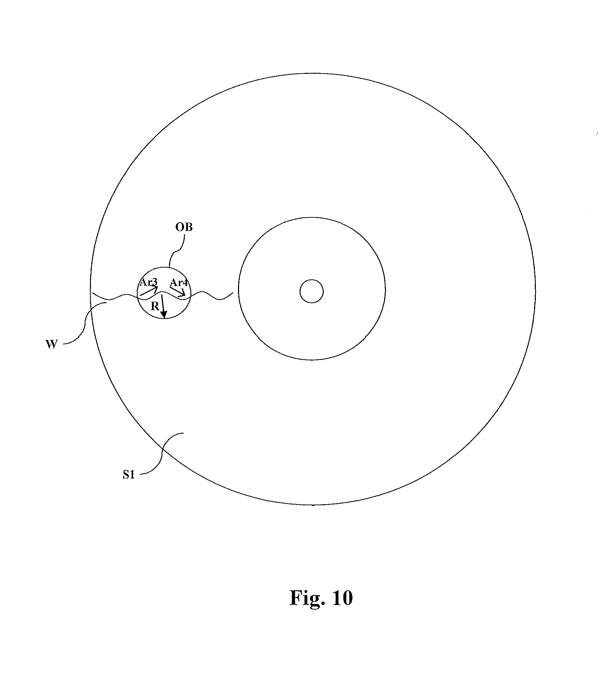

The process of forming the hydrodynamic lubrication oil film of lubricant according to the first embodiment of the application will be described below with reference to Figure 10.

In Figure 10, S1 schematically denotes the thrust surface of the main bearing housing 40; W denotes the section of the uneven construction (i.e., the corrugated surface) on the main bearing housing 40; OB schematically denotes the orbiting path of any point on the movable scroll 160; R denotes a radius of the orbiting path and is referred to as an orbiting gyration radius of the movable scroll. It is assumed that the movable scroll still orbits in the clockwise direction. As shown in Figure 10, when any point on the movable scroll orbits along the path OB, the point may pass over the crest and trough of the corrugated surface. Provided that the movable scroll cannot make valid tilt orbiting motion due to a variety of reasons (that is, the thrust surface of the movable scroll moves horizontally), due to the nature of the corrugated surface, the points on the corrugated surface is differently distant from the thrust surface of the movable scroll. When a point on the movable scroll moves from a trough towards a crest of the corrugated surface (e.g., in the range shown by arrow Ar3 in the Figure), the spaced distance between the movable scroll and the corrugated surface is gradually decreased, so that the hydrodynamic lubrication oil film of lubricant is formed of the lubricant therebetween due to the wedge effect; and when a point on the movable scroll moves from a crest towards a trough of the corrugated surface (e.g., in the range shown by arrow Ar4 in the Figure), the spaced distance between the movable scroll and the corrugated surface is gradually increased, so that the hydrodynamic lubrication oil film of lubricant is damaged. Thus, generally, with the presence of the corrugated surface, even if the movable scroll does not make tilt orbiting motion, the effective hydrodynamic lubrication oil film may be formed on 50% area of the thrust surfaces of the movable scroll and the main bearing housing. Certainly, when the movable scroll can perform a tilt orbiting motion, with the configuration of the application, the effective oil film of lubricant may also be formed between the main bearing housing and the movable scroll.

As described above, the wavelength L of each wave of the corrugated surface may be set to be between 0.25 and 2 times as long as the orbiting gyration radius R of the movable scroll. When the wavelength L is 0.25 times as long as R, a point on the movable scroll may pass over several crests and troughs while orbiting, thereby effectively forming the oil film of lubricant. When the wavelength L is 2 times as long as R, a point on the movable scroll may orbit over a part of a wave. Even so, the gap between any point and the main bearing may be gradually decreased within 50% time duration of orbiting motion, and thus the hydrodynamic oil film may be formed.

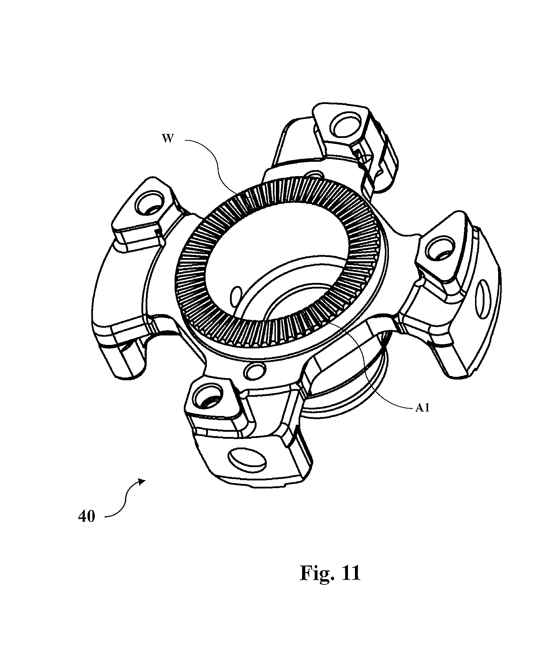

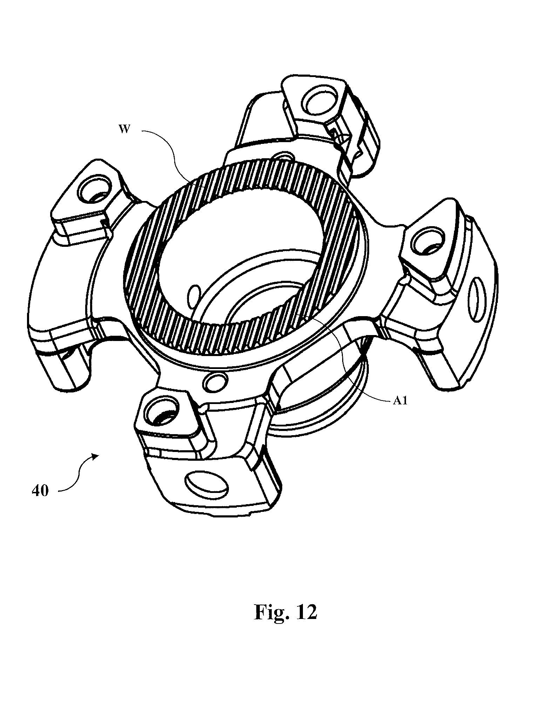

In a second embodiment shown in Figure 11, the locus line of the crest (or trough) of each wave of the corrugated surface may be configured such as to be a line extending radially from the central axis of the main bearing housing. In a third embodiment shown in Figure 12, the locus line of the crest (or trough) of each wave of the corrugated surface may be configured such as to be a line perpendicular to the central axis of the main bearing housing. In the third embodiment, the locus lines may be parallel. In any other embodiment not shown, the locus line of the crest (or trough) of each wave of the corrugated surface may be configured such as to be a spiral line gradually unwound from the radial inside towards the radial outside of the main bearing housing.

In the second, third and any other embodiment, each wave of the corrugated surface may be formed in the form of one of the sinusoidal wave, the triangular wave and the trapezoidal wave, and the parameters, such as wavelength L, amplitude h, length of platform Z and the like, of each wave of the corrugated surface may be set as that in the first embodiment. Certainly, the second, third and any other embodiment may bring about the similar advantageous effects as the first embodiment.

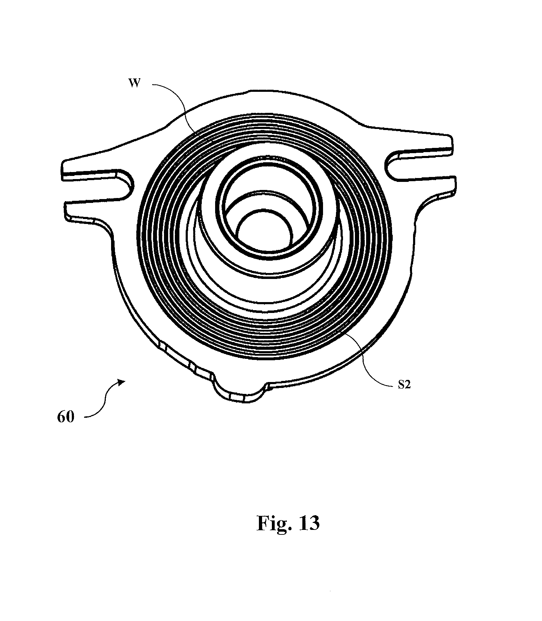

A fourth embodiment of the application will be described below with reference to Figure 13. A movable scroll 160 for a scroll compressor according to the fourth embodiment may include a thrust surface S2 for being supported by the main bearing housing140. An uneven construction W is formed on at least part of the thrust surface such that a hydrodynamic lubrication oil film can be formed of lubricant between the movable scroll 160 and the main bearing housing 140.

Similar to the first embodiment, in the fourth embodiment, the uneven construction W may be formed on the entire thrust surface S2 of the movable scroll. The configuration and parameters of the uneven construction W may be chosen with reference to the first to third embodiments. Particularly, the uneven construction W on the thrust surface S2 of the movable scroll 160 may include at least a surface inclined with respect to the thrust surface of the main bearing housing 140. Preferably, the uneven construction W may be shaped as a corrugated surface. The corrugated surface may include one or more waves, and the locus line of the crest or trough of each wave may be configured in one of the following forms: a) the locus line forms a circle with its center being the central axis of the movable scroll; b) the locus line is formed as a spiral line gradually unwound from the radial inside towards the radial outside of the movable scroll; c) the locus line is formed as a line extending radially from the central axis of the movable scroll; d) the locus line is formed as a line perpendicular to the central axis of the movable scroll. Each wave of the corrugated surface may be formed as one of a sinusoidal wave, a triangular wave and a trapezoidal wave. The wavelength of each wave of the corrugated surface is ranged between 0.25 and 2 times, preferably between 0.75 and 1.5 times as long as the orbiting gyration radius of the movable scroll, more preferably, equal to the orbiting gyration radius of the movable scroll. The amplitude of each wave of the corrugated surface may be set to be larger than 10 micrometers, preferably between 30 and 100 micrometers. When each wave of the corrugated surface is a trapezoidal wave, the length of top side of the trapezoidal wave may be between 1/6 and 1/2 of the wavelength of the trapezoidal wave.

Similarly, the corrugated surface on the movable scroll may be produced by one of the following processes: a) machining, such as turning or grinding; b) pressing; c) stamping. The corrugated surface may be integrally formed on the movable scroll, and the corrugated surface may be formed on a separate member which is then assembled onto the movable scroll.

By using the fourth embodiment alone or in combination with the first embodiment, the same advantageous effects as produced from the first embodiment can be achieved.

According to the application, there may be further provided a scroll compressor including the main bearing housing according to the first, second or fourth embodiment and/or the movable scroll according to the fourth embodiment. The scroll compressor may be a scroll compressor using CO₂ as refrigerant. Furthermore, the scroll compressor may be a scroll compressor with a variable frequency operating function.

While various embodiments and variations of the present application have been described in detail above, person skilled in the art will appreciate that the present application is not limited to the specific embodiments and variations described above but may include other possible group or combination.

For example, according to an aspect of the application, a main bearing housing for a scroll compressor is provided, including a thrust surface for supporting a movable scroll, wherein an uneven construction may be formed on at least part of the thrust surface such that a hydrodynamic lubrication oil film may be formed from lubricant between the main bearing housing and the movable scroll.

According to a second aspect of the application, the uneven construction may be formed on the entire thrust surface.

According to a third aspect of the application, the uneven construction may be formed in the form of a corrugated surface.

According to a fourth aspect of the application, the corrugated surface may include one or more waves, each wave has a crest or trough with a locus line in one of the following forms: a) a circle with its center being the central axis of the main bearing housing; b) a spiral line gradually unwound from the radial inside towards the radial outside of the main bearing housing; c) a line extending radially from the central axis of the main bearing housing; and d) a line perpendicular to the central axis of the main bearing housing.

According to a fifth aspect of the application, each wave of the corrugated surface may be one of a sinusoidal wave, a triangular wave and a trapezoidal wave.

According to a sixth aspect of the application, each wave of the corrugated surface may have a wavelength being between 0.25 and 2 times as long as an orbiting gyration radius of the movable scroll.

According to a seventh aspect of the application, each wave of the corrugated surface may have a wavelength being between 0.75 and 1.5 times as long as an orbiting gyration radius of the movable scroll.

According to an eighth aspect of the application, each wave of the corrugated surface may have a wavelength equal to an orbiting gyration radius of the movable scroll.

According to a ninth aspect of the application, each wave of the corrugated surface may have an amplitude larger than 10 micrometers, preferably between 30 and 100 micrometers.

According to a tenth aspect of the application, in case of each wave of the corrugated surface being the trapezoidal wave, a top side of the trapezoidal wave may have a length being 1/6 (a sixth) to 1/2 (a half) of a wavelength of the trapezoidal wave; and in case of each wave of the corrugated surface being the triangular wave, the triangular wave includes a platform at its vertex angle, and the platform has a length being 1/6 to 1/2 of a wavelength of the triangular wave.

According to an eleventh aspect of the application, the corrugated surface may be produced in one of the following processes: a) machining, b) pressing, c) stamping.

According to a twelfth aspect of the application, the corrugated surface may be integrally formed on the main bearing housing, or the corrugated surface may be formed on a separate member and then assembled onto the main bearing housing.

According to a thirteenth aspect of the application, the uneven construction on the thrust surface of the main bearing housing may include at least a surface inclined relative to the thrust surface of the movable scroll.

According to a fourteenth aspect of the application, there is provided a movable scroll for a scroll compressor, including a thrust surface for being supported by a main bearing housing, wherein an uneven construction may be formed on at least part of the thrust surface such that a hydrodynamic lubrication oil film may be formed from lubricant between the movable scroll and the main bearing housing.

According to a fifteenth aspect of the application, the uneven construction may be formed on the entire thrust surface.

According to a sixteenth aspect of the application, the uneven construction may be formed in the form of a corrugated surface.

According to a seventeenth aspect of the application, the corrugated surface may include one or more waves, each wave has a crest or trough with a locus line in one of the following forms: a) a circle with its center being the central axis of the movable scroll; b) a spiral line gradually unwound from the radial inside towards the radial outside of the movable scroll; c) a line extending radially from the central axis of the movable scroll; and d) a line perpendicular to the central axis of the movable scroll.

According to an eighteenth aspect of the application, each wave of the corrugated surface may be one of a sinusoidal wave, a triangular wave and a trapezoidal wave.

According to a nineteenth aspect of the application, each wave of the corrugated surface may have a wavelength being between 0.25 and 2 times as long as an orbiting gyration radius of the movable scroll.

According to a twentieth aspect of the application, each wave of the corrugated surface may have a wavelength being between 0.75 and 1.5 times as long as an orbiting gyration radius of the movable scroll.

According to a twenty-first aspect of the application, each wave of the corrugated surface may have a wavelength equal to an orbiting gyration radius of the movable scroll.

According to a twenty-second aspect of the application, each wave of the corrugated surface may have an amplitude larger than 10 micrometers, preferably between 30 and 100 micrometers.

According to a twenty-third aspect of the application, in case of each wave of the corrugated surface being the trapezoidal wave, a top side of the trapezoidal wave may have a length being 1/6 (a sixth) to 1/2 (a half) of a wavelength of the trapezoidal wave; and in case of each wave of the corrugated surface being the triangular wave, the triangular wave includes a platform at its vertex, and the platform has a length being 1/6 to 1/2 of a wavelength of the triangular wave.

According to a twenty-fourth aspect of the application, the corrugated surface may be produced in one of the following processes: a) machining, b) pressing, c) stamping.

According to a twenty-fifth aspect of the application, the corrugated surface may be integrally formed on the movable scroll, or the corrugated surface may be formed on a separate member and then assembled onto the movable scroll.

According to a twenty-sixth aspect of the application, the uneven construction on the thrust surface of the main bearing housing may include at least a surface inclined relative to the thrust surface of the main bearing housing.

According to a twenty-seventh aspect of the application, a scroll compressor is provided, including at least one of the above-mentioned main bearing housing and the above-mentioned movable scroll.

According to a twenty-eighth aspect of the application, the scroll compressor may be a scroll compressor using CO₂ as working medium.

According to a twenty-ninth aspect of the application, the scroll compressor is a scroll compressor with variable frequency operating function.

While various embodiments of the present application have been described in detail herein, it should be understood that the present application is not limited to the specific embodiments described and illustrated herein in detail, and that those skilled in the art can also make other variations and modifications without departing from the spirit and scope of the application. These variations and modifications should also be deemed to fall into the protective scope of the application. Furthermore, all the elements described herein can be replaced by other technically equivalent elements.

## Claims

1. A main bearing housing (40) for a scroll compressor, comprising a thrust surface (S1) for supporting a movable scroll, wherein an uneven construction (W) is formed on at least part of the thrust surface (S1) such that a hydrodynamic lubrication oil film can be formed from lubricant between the main bearing housing (40) and the movable scroll.

2. The main bearing housing according to claim 1, wherein the uneven construction (W) is formed on the entire thrust surface (S1).

3. The main bearing housing according to claim 1 or 2, wherein the uneven construction (W) is configured in the form of a corrugated surface.

4. The main bearing housing according to claim 3, wherein the corrugated surface comprises one or more waves (W1, W2, W3), each wave has a crest or trough with a locus line (A1, A2, A3) in one of the following forms:
a) a circle with a center being a central axis (O-O) of the main bearing housing (40);
b) a spiral line gradually unwound from a radial inside towards a radial outside of the main bearing housing (40);
c) a line extending radially from the central axis (O-O) of the main bearing housing (40);
d) a line perpendicular to the central axis (O-O) of the main bearing housing (40).

5. The main bearing housing according to claim 4, wherein each wave of the corrugated surface is configured as one of a sinusoidal wave, a triangular wave and a trapezoidal wave.

6. The main bearing housing according to claim 5, wherein each wave of the corrugated surface has a wavelength (L) being between 0.25 and 2 times as long as an orbiting gyration radius (R) of the movable scroll.

7. The main bearing housing according to claim 6, wherein the wavelength (L) of each wave of the corrugated surface is between 0.75 and 1.5 times as long as the orbiting gyration radius (R) of the movable scroll.

8. The main bearing housing according to claim 7, wherein the wavelength (L) of each wave of the corrugated surface is equal to the orbiting gyration radius (R) of the movable scroll.

9. The main bearing housing according to claim 5, wherein each wave of the corrugated surface has an amplitude (h) larger than 10 micrometers, preferably between 30 and 100 micrometers.

10. The main bearing housing according to claim 5, wherein in case of each wave of the corrugated surface being the trapezoidal wave, a top side (Z) of the trapezoidal wave has a length (a) being between 1/6 and 1/2 of a wavelength (L) of the trapezoidal wave; and in case of each wave of the corrugated surface being the triangular wave, the triangular wave includes a platform (Z) at its vertex angle, and the platform (Z) has a length (a) being between 1/6 and 1/2 of the wavelength (L) of the triangular wave.

11. The main bearing housing according to claim 5, wherein the corrugated surface is produced by one of the following processes:
a) machining,
b) pressing,
c) stamping.

12. The main bearing housing according to claim 5, wherein the corrugated surface is integrally formed on the main bearing housing (40), or
the corrugated surface is formed on a separate member and then assembled onto the main bearing housing (40).

13. The main bearing housing according to claim 1 or 2, wherein the uneven construction (W) on the thrust surface (S1) of the main bearing housing (40) comprises at least a surface inclined relative to a thrust surface of the movable scroll.

14. a movable scroll (60) for a scroll compressor, comprising a thrust surface (S2) for being supported by a main bearing housing, wherein an uneven construction (W) is formed on at least part of the thrust surface (S2) such that a hydrodynamic lubrication oil film can be formed from lubricant between the movable scroll (60) and the main bearing housing.

15. The movable scroll according to claim 14, wherein the uneven construction (W) is formed on the entire thrust surface (S2).

16. The movable scroll according to claim 14 or 15, wherein the uneven construction (W) is configured in the form of a corrugated surface.

17. The movable scroll according to claim 16, wherein the corrugated surface comprises one or more waves (W1, W2, W3), each wave has a crest or trough with a locus line (A1, A2, A3) in one of the following forms:
a) a circle with a center being a central axis of the movable scroll (60);
b)a spiral line gradually unwound from a radial inside towards a radial outside of the movable scroll (60);
c) a line extending radially from the central axis of the movable scroll (60);
d) a line perpendicular to the central axis of the movable scroll (60).

18. The movable scroll according to claim 17, wherein each wave of the corrugated surface is configured as one of a sinusoidal wave, a triangular wave and a trapezoidal wave.

19. The movable scroll according to claim 18, wherein each wave of the corrugated surface has a wavelength (L) being between 0.25 and 2 times as long as an orbiting gyration radius (R) of the movable scroll (60).

20. The movable scroll according to claim 19, wherein the wavelength (L) of each wave of the corrugated surface is between 0.75 and 1.5 times as long as the orbiting gyration radius (R) of the movable scroll (60).

21. The movable scroll according to claim 20, wherein the wavelength (L) of each wave of the corrugated surface is equal to the orbiting gyration radius (R) of the movable scroll (60).

22. The movable scroll according to claim 18, wherein each wave of the corrugated surface has an amplitude (h) larger than 10 micrometers, preferably between 30 and 100 micrometers.

23. The movable scroll according to claim 18, wherein in case of each wave of the corrugated surface being the trapezoidal wave, a top side (Z) of the trapezoidal wave has a length (a) being between 1/6 and 1/2 of a wavelength (L) of the trapezoidal wave; and in case of each wave of the corrugated surface being the triangular wave, the triangular wave includes a platform (Z) at its vertex angle, and the platform (Z) has a length (a) being between 1/6 and 1/2 of the wavelength (L) of the triangular wave.

24. The movable scroll according to claim 18, wherein the corrugated surface is produced by one of the following processes:
a) machining,
b) pressing,
c) stamping.

25. The movable scroll according to claim 18, wherein the corrugated surface is integrally formed on the movable scroll (60), or
the corrugated surface is formed on a separate member and then assembled onto the movable scroll (60).

26. The movable scroll according to claim 14 or 15, wherein the uneven construction on the thrust surface (S2) of the movable scroll (60) comprises at least a surface inclined relative to a thrust surface of the main bearing housing.

27. A scroll compressor, comprising at lease one of the main bearing housing (40) according to any one of claims 1 to 13 and the movable scroll (60) according to any one of claims 14 to 26.

28. The scroll compressor according to claim 27, wherein the scroll compressor is a scroll compressor using CO₂ as working medium.

29. The scroll compressor according to claim 27, wherein the scroll compressor is a scroll compressor with variable frequency operating function.
